# EUROPEAN PATENT APPLICATION

(11) **EP 3 868 491 A1**
(43) Date of publication of application: **25.08.2021**
(21) Application number: 21157237.5
(22) Date of filing: 15.02.2021
(51) Int. Cl.: B22F 1/00, B22F 1/02, B22F 10/20, B33Y 70/10, C22C 1/05, C22C 32/00

(54) **METHODS OF MANUFACTURING DISPERSION STRENGTHENED MATERIALS**

(30) Priority: 21.02.2020 US 202016797122
(71) Applicant: General Electric Company, Schenectady, NY 12345 (US)
(72) Inventor: KONITZER, Douglas, Cincinnati, Ohio 45215 (US); WESSMAN, Andrew, Cincinnati, Ohio 45215 (US)
(74) Representative: Openshaw & Co.

(57) **Abstract**

A method for producing a dispersion strengthened material is presented. The method includes exposing a plurality of first metal particles to a suspension of dispersoid forming particles to form metal particles having the dispersoid forming particles thereon. The metal particles having the dispersoid forming particles there are subjected to an energy process to form a dispersion strengthened material. Also provided is a method of manufacturing a dispersion strengthened material or metal component that contains nano-sized dispersoids in a metal-based matrix.

## Description

### FIELD

The present subject matter relates generally to methods of producing dispersion strengthened material, and more particularly the embodiments of the specification relate to methods of producing dispersion strengthened materials having nano-sized dispersoids therein.

### BACKGROUND

One process for making dispersion strengthened materials is a mechanical alloying process based on the mixing of certain metal particles with other particle powders using a ball milling process, followed by hot consolidation of the mixture to form a body. However, mechanical alloying processes can introduce certain contaminants to the metal particles during milling and extraction that can affect the structural and chemical properties of the resulting material. Furthermore, metal powders and particles produced in this way can pick up stray elements during milling, which can introduce undesirable contaminants in the final material.

Additionally, mechanical alloying processes, such as the ball milling process described, can be time consuming and expensive. Moreover, powder quality of the ball milled powders may not be reliable and replicable for large scale powder production.

### BRIEF DESCRIPTION

The embodiments of the specification relate to methods of manufacturing dispersion strengthened materials, and more particularly to methods of producing dispersion strengthened materials having nano-sized dispersoids therein.

In one embodiment, provided is a method for producing a dispersion strengthened material including exposing a plurality of first metal particles to a suspension of dispersoid forming particles. The first metal particles and dispersoid forming particles may comprise the same or different metallic compositions. The dispersoid forming particles may agglomerate to the surface of the first metal particles, thus creating a plurality of metal particles having dispersoid forming particles thereon. The metal particles having the dispersoid forming particles thereon are subjected to an energy process to form a dispersion strengthened material.

In yet another embodiment, provided is a method of manufacturing a dispersion strengthened metal component comprising nano-sized dispersoids dispersed in a metal-based matrix. The method includes covering a first metal powder with a suspension containing a suitable fluid carrier, such as water, and a dispersoid forming powder to form a metal powder having dispersoid forming particles thereon. The first metal powder and dispersoid forming powder may comprise different metallic compositions. The first metal powder may also include particles having an average particle size that is greater than the particle size of the dispersoid forming particles. The method further includes, producing a component from the metal powder having the dispersoid forming particles thereon using electron beam melting (EBM), direct selective laser melting (DSLM), selective laser melting (SLM), direct metal laser melting (DMLM), or directed energy deposition (DED).

### DRAWINGS

These and other features and aspects of embodiments of the invention will become better understood when the following detailed description is read with reference to the accompanying drawings in which like characters represent like parts throughout the drawings, wherein:
FIG. 1 is a flow chart of an example method of making a dispersion strengthened material in accordance with embodiments of the present specification;
FIG. 2A illustrates a magnified image of a nickel particle coated with fine alumina particles in accordance with embodiments of the present specification;
FIG. 2B illustrates a magnified image of a plurality of nickel particles coated with fine alumina particles in accordance with embodiments of the present specification;
FIG. 3A illustrates a transmission electron image of a dispersion strengthened nickel material, in accordance with embodiments of the present disclosure;
FIG. 3B illustrates a transmission electron image of a dispersion strengthened nickel material having nano-sized dispersoids therein, in accordance with embodiments of the present disclosure; and
FIG. 3C illustrates a transmission electron image of a dispersion strengthened nickel material having nano-sized dispersoids therein, in accordance with embodiments of the present disclosure.

### DETAILED DESCRIPTION

Various embodiments disclose methods for producing dispersion strengthened materials with additive processing. The process includes exposing a plurality of first metal particles comprising a first metallic composition to a suspension of dispersoid forming particles comprising a second metallic composition to form a plurality of metal particles having the dispersoid forming particles thereon. The plurality of metal particles having the dispersoid forming particles thereon has an interior portion comprising the first metallic composition and an outer surface portion comprising the dispersoid forming particles of the second metallic composition. The plurality of metal particles having the dispersoid forming particles thereon can be subjected to an energy process to form a dispersion strengthened material. In certain embodiments, the first metallic composition may include any metallic alloy or base alloy composition, for example, nickel alloys, titanium alloys, cobalt alloys, zinc alloys, aluminum alloys, iron alloys, and/or copper alloys. In some embodiments, the plurality of first metal particles has a first mean particle size that is from about 10 µm to about 1000µm. In certain embodiments, the second metallic composition may include any suitable nitride, carbide, and/or oxide of aluminum, yttrium, cerium, lanthanum, magnesium, tin, titanium, zinc, and/or zirconium. In some embodiments, the dispersoid forming particles have a second mean particle size of from about 5 nm to about 250 nm. In certain embodiments, the plurality of first metal particles has a first mean particle size that is greater than the second mean particle size of the dispersoid forming particles. In some embodiments, the suspension includes a fluid carrier that is water.

In some embodiments, the energy process comprises electron beam melting (EBM), direct selective laser melting (DSLM), selective laser melting (SLM), direct metal laser melting (DMLM), directed energy deposition (DED) and combinations thereof. During the energy process, the metal particles having dispersoid forming particles thereon form a dispersion strengthened material that contains nano-sized dispersoids of the second metallic composition. In certain embodiments, the dispersion strengthened material contains from about 1% to about 10% by volume of a dispersoid comprising the second metallic composition.

The methods of forming the dispersion strengthened material of the present disclosure do not require mechanical alloying to form the dispersion strengthened material. Advantageously, the dispersion strengthened material formed according to methods of the present disclosure may have fewer contaminants as compared to those formed by mechanical alloying. Further, the dispersion strengthened materials of the present specification may be manufactured at lower manufacturing costs and may be manufactured in less time as compared to other materials manufactured by other means not disclosed herein.

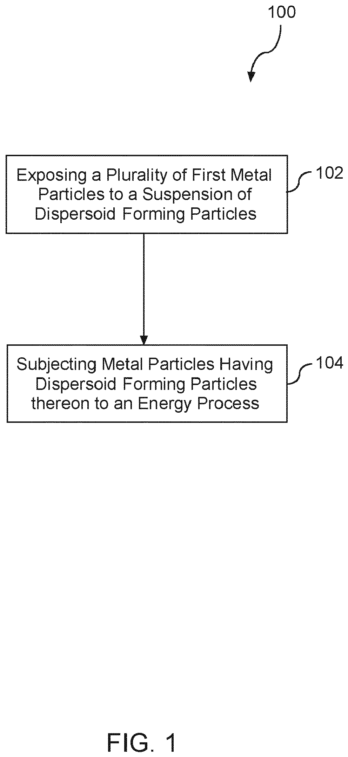

FIG. 1 illustrates a flow chart of an example method (100) of making a dispersion strengthened material having nano-sized particles of the dispersoid in the metal-based matrix in accordance with embodiments of the present specification. At (102) the method includes exposing a plurality of first metal particles to a suspension of dispersoid forming particles. The first metal particles comprise a first metallic composition. The first metallic composition may be any metal composition or metal alloy suitable for use as a metal-based matrix in a dispersion strengthened material. In certain embodiments, the first metallic composition may include iron, chromium, nickel, aluminum, cobalt, molybdenum, manganese, magnesium, silicon, copper, niobium, titanium, refractory metals, tantalum, hafnium, yttrium, vanadium, tungsten, zirconium, and combinations thereof. In some embodiments, the first metallic composition may include a metal-based matrix, such as an alloy constituent matrix comprising stainless steel, an iron based alloy, an aluminum based alloy, a titanium based alloy, a nickel based alloy, or combinations thereon.

The first metal particles may also have a first mean particle size. In some embodiments, the first mean particle size is the average diameter size of the metal particles. In some embodiments, the first mean particle size may be from about 10 µm to about 1000µm. In some embodiments, the first mean particle size may be from about 20 µm to about 800µm. In some embodiments, the first mean particle size may be from about 30 µm to about 700µm. In some embodiments, the first mean particle size may be from about 40 µm to about 600µm. In some embodiments, the first mean particle size may be from about 50 µm to about 500µm. In some embodiments, the first mean particle size may be from about 100 µm to about 400µm. In some embodiments, the first mean particle size may be from about 200 µm to about 300µm.

The dispersoid forming particles comprise a second metallic composition. The second metallic composition may be selected based on the desired characteristics and dispersoid material for the dispersion strengthened material. For example, the second metallic composition may include any suitable metallic oxide, metallic nitride, metallic carbide, or combinations thereof. In some embodiments, the second metallic composition may be any metal or metal alloy suitable for use as a dispersoid within a metal-based matrix. In some embodiments, the second metallic composition includes a metal oxide, such as aluminum oxide. In some embodiments, the second metallic composition may include iron, nickel, cobalt, molybdenum, manganese, magnesium, silicon, copper, niobium, titanium, refractory metals, tantalum, hafnium, vanadium, boron, aluminum, yttrium, antimony, barium, cerium, indium, lanthanum, magnesium, tin, titanium, zinc, zirconium, and combinations thereof. In some embodiments, the second metallic composition may include any suitable oxide, carbide or nitride of iron, nickel, cobalt, molybdenum, manganese, magnesium, silicon, copper, niobium, titanium, refractory metals, tantalum, hafnium, vanadium, boron, aluminum, yttrium, antimony, barium, cerium, indium, lanthanum, magnesium, tin, titanium, zinc, zirconium, and combinations thereof. Suitable oxides include, but are not limited to, oxides of the elements magnesium, aluminum, titanium, rare earth elements such as, yttrium, lanthanum, cerium, neodymium, zirconium, and/or hafnium. Suitable carbides include carbides, but are not limited to, carbides of the elements boron, silicon, titanium, vanadium, chromium, zirconium, and refractory metal elements such as niobium, molybdenum, tantalum, tungsten, zirconium, and/or hafnium. In some embodiments, the second metallic composition may include a metal-based matrix, such as an alloy constituent matrix comprising stainless steel, an iron based alloy, an aluminum based alloy, a titanium based alloy, a nickel based alloy, or combinations thereon.

The dispersoid forming particles may also have a second mean particle size. In some embodiments, the second mean particle size is the average diameter size of the dispersoid forming particles. In some embodiments, the second mean particle size may be from about 5 nm to about 250 nm. In some embodiments, the second mean particle size may be from about 10 nm to about 225 nm. In some embodiments, the second mean particle size may be from about 20 nm to about 200 nm. In some embodiments, the second mean particle size may be from about 40 nm to about 175 nm. In some embodiments, the second mean particle size may be from about 75 nm to about 150 nm. In some embodiments, the second mean particle size may be from about 90 nm to about 150 nm. Accordingly, in certain embodiments, the first metal particles have a larger or greater mean particle size as compared to the dispersoid forming particles.

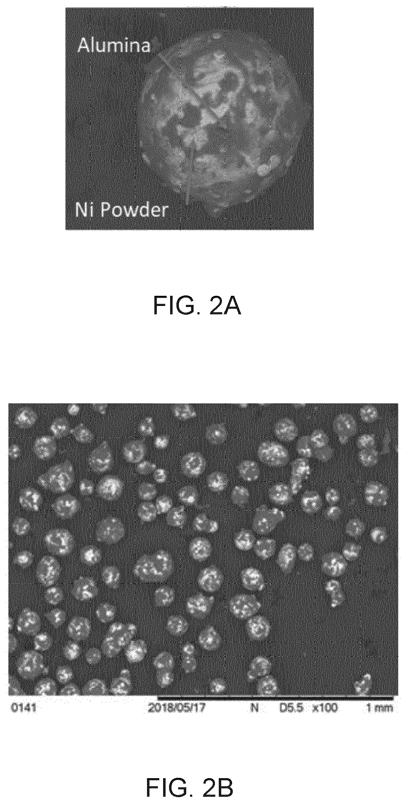

In some embodiments, exposing the plurality of first metal particles to a suspension of dispersoid forming particles (102) includes placing the plurality of first metal particles in a suitable receptacle and pouring a suspension of dispersoid forming particles over the first metal particles in the receptacle. The suspension may include any suitable fluid carrier. In some embodiments, the fluid carrier may include water. The first metal particles and dispersoid forming particles may then be subjected to any suitable evaporation process to remove the fluid carrier. Suitable evaporation processes may include any suitable drying process to remove the fluid carrier, such as spray-drying and/or vacuum drying. During evaporation, the dispersoid forming particles begin agglomerating on the surface of the first metal particles. After the fluid carrier has been evaporated, the outer surface of the first metal particles may contain agglomerates of the dispersoid metal particles thereon. In certain embodiments, the dispersoid forming particles or satellite particles containing the dispersoid forming particles may coat the outer surface of each of the first metal particles. In some embodiments, the coating of dispersoid forming particles on the outer surface of the first metal particles may be uneven. For example, and without being bound by any particular theory, as the first metal particles and dispersoid forming particles are exposed to each other, the dispersoid forming particles may agglomerate unevenly to the outer surface of each of the first metal particles forming agglomerates or satellite particles thereon. Indeed, the agglomeration of the dispersoid forming particles of the second metallic composition on the first metal particles may produce certain areas having thicker or greater amounts of the second metallic composition on the outer surface of one or more of the first metal particles. (See FIG. 2A). Furthermore, it is also conceivable that certain first metal particles may contain areas or portions on their outer surface where substantially no second metallic composition has agglomerated. (See FIG. 2A). Accordingly, in some embodiments, the dispersoid forming particles of the second metallic composition may unevenly coat or agglomerate to the outer surface of each of the first metal particles. (See FIGs. 2A and 2B).

In some embodiments, combining the first plurality of metal particles with the dispersoid forming particles may form a plurality of metal particles having the dispersoid forming particles thereon, where the metal particles have an interior portion comprising the first metallic composition and an outer surface portion comprising the second metallic composition.

The method (100) also includes subjecting the plurality of metal particles having dispersoid forming particles thereon to an energy process to form a dispersion strengthened material (104). The energy process used to form the dispersion strengthened material may be any process known in the art including, but not limited to, electron beam melting (EBM), direct selective laser melting (DSLM), selective laser melting (SLM), direct metal laser melting (DMLM), directed energy deposition (DED) and combinations thereof. The energy process parameters may be selected to control size and distribution of the dispersoids within the metal-based matrix. In some embodiments, the nano-sized dispersoids are formed *in situ* in the dispersion strengthened material during the energy process.

In some embodiments, the energy process may utilize an energy source such as a laser or electron beam. The laser or electron beam process parameters may be set to promote *in-situ* uniform formation of nano-sized dispersoids in the metal-based matrix. Non-limiting examples of these parameters may include, but are not limited to, an energy output of the laser or electron beam, a hatch spacing, a thickness of a deposited layer, a scan speed of the laser or electron beam, the protection shield gas flow, an amount of oxygen, an amount of nitrogen, an amount or concentration of reactive elements, a scan strategy or scan pattern, and the like, and combinations thereof. It may be appreciated that these parameters may be interdependent and may vary based on the nature of metal-based matrix and reactive elements.

Laser or electron beam processes have extremely fast heating and cooling rates during metal melting. This fast solidification process by laser or electron melting facilitates the formation of nano-sized dispersoids during additive manufacturing. The heating/cooling rate of the additive manufacturing process is controlled by a combination of energy output of the laser or electron beam, the hatch spacing, the thickness of the deposited layer, the scan speed, shield gas flow, scan strategy/pattern, layer thickness and the like. The laser or electron beam power, scan speed in combination with the other parameters of the laser or electron beam powder bed additive manufacturing process may be controlled to produce a desired size, volume density, and distribution of the nano-sized dispersoids.

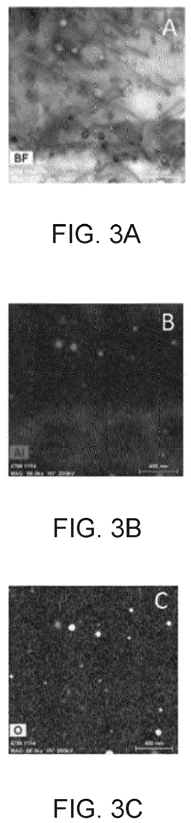

Exposure of the metal particles having dispersion forming particles thereon to the energy process produces a material or component having a metal-based matrix comprising the first metallic material with dispersoids of the second metallic composition within the metal-based matrix. In some embodiments, the dispersoids of the second metallic composition are nano-sized. In certain embodiments, the average size of the nano-sized dispersoids present in the dispersion strengthened material is in a range of from about 0.5 nanometers to about 500 nanometers. Shapes of the nano-sized dispersoids depend on interfacial energies of the dispersoids with respect to interfacial energies of the metal-based matrix. The nano-sized dispersoids may be spherical in shape. (See FIG. 3A-3C). However, other shapes of the nano-sized dispersoids are also envisioned within the purview of the present specification. In certain embodiments, a volume fraction of the nano-sized dispersoids in the dispersion strengthened material is in a range of from about 1 percent to about 10 percent.

Further, the nano-sized dispersoids formed during the energy process, such as a laser powder bed process, may enhance mechanical properties of the resultant dispersion strengthened material. In certain embodiments, dispersion strengthened material containing dispersoids formed according to methods presented herein may exhibit enhanced high temperature mechanical properties.

The nano-sized dispersoids of the second metallic composition may be uniformly distributed with high density in the metal-based matrix. Uniform distribution of the nano-sized precipitates in the metal-based matrix results in enhanced material properties of the dispersion strengthened material and the resultant component, such as, but not limited to, yield strength, tensile strength, corrosion resistance, crack resistance, creep resistance, high temperature mechanical properties, enhanced irradiation damage tolerance, and combinations thereof. In some embodiments, the dispersion strengthened material disclosed herein containing the metallic dispersoids may be used in power generation applications, aerospace applications, automotive applications, medical fields, and the like.

In certain embodiments, during the energy process, such as during melting and solidification processes of laser or electron beam additive manufacturing, nano-sized oxide dispersoids may be formed *in-situ* by reactions between oxygen that is present on the surface of the metal particles and the reactive elements present in the metal particles. The laser or electron beam process parameters can be selected to control size and distribution of the nano-sized oxide dispersoids.

In some embodiments, the methods herein include subjecting the dispersion strengthened material to one or more post-formation heat treatments to optimize the grain microstructure of the metal and control stability, size, distribution, and density of the dispersoids therein, to produce stable, nanoscale, and uniformly distributed nano-sized dispersoids. In certain embodiments, the nano-sized metallic or oxide dispersoids are distributed intragranularly, intergranularly, or both in the metal-based matrix. In some embodiments, the one or more heat treatments may include whole component furnace heat treatment, local heat treatment (i.e. surface heating), laser heating, electron beam heating, and the like. In some embodiments, the methods herein may include exposing the dispersion strengthened material to a directional recrystallization process.

It should be noted that formation of the nano-sized dispersoids in a desired manner may depend on the chemistry of the first metal particles and the dispersoid forming particles, such as the concentration of reactive elements, the amount of oxygen, the amount of nitrogen, the amount of carbon, laser process parameters, electron beam parameters, post heat treatment parameters, or combinations thereof.

In contrast to conventional mechanical ball milling processes that may be used for producing dispersion strengthened materials, the present specification uses additive manufacturing to make dispersion strengthened materials and components using such materials. Advantageously, the methods of forming the dispersion strengthened materials of the present specification may be implemented in a time efficient and cost productive manner. For example, additive manufacturing of the dispersion strengthened materials of the present specification allows for shorter manufacturing times as compared to the manufacturing time required in existing processes that include ball milling and other, similar time consuming processes. The present specification provides a successful method of making dispersion strengthened materials from a first plurality of metal particles and a second plurality of dispersoid forming particles that does not require mechanical ball milling in order to agglomerate the dispersoid forming particles to the first metal particles. Methods of the present specification eliminate the need for mechanical alloying of the particles. In addition, the method disclosed herein avoids the need to formulate special powder compositions to form the desired dispersoids. As provided herein, by coating the first powder with dispersoid forming particles according to example embodiments of the method provided herein, any powder, such as a metal containing powder, can be made into a dispersoid strengthened powder by coating with the disclosed dispersoid forming particles and using additive manufacturing to consolidate the combination.

### EXAMPLE 1

Example 1 illustrates forming a dispersion strengthened material according to the present disclosure. Example 1 provided herein illustrates a non-limiting example embodiment of the method in accordance with the present disclosure.

A quantity of powder of the composition corresponding to the alloy Rene 65 was mixed with Nyacol Al20 from Nyacol Nano Technologies Inc. Nyacol Al20 is a 20wt% mixture of (AlO(OH)), or Al₂O₃.H₂O, particles of 60-90nm size in a water carrier. The mixing was carried out in a beaker and consisted of pouring the Nyacol A120 into the metal powder, followed by stirring while the water evaporated. The resulting powder is shown in FIGs. 2A and 2B. As shown, the fine alumina particles are adhered to the nickel powder in clumps.

The resulting coated powder was placed in a Concept Laser MLab powder bed 3D printing machine and small specimens were produced. Transmission Electron Microscopy (TEM) specimens were prepared from the small as-built DMLM specimens by Focused Ion Beam (FIB) milling. The resulting TEM images of the dispersion strengthened material are shown in FIGs. 3A, 3B, and 3C.

As shown in FIGs. 3B and3C, the correspondence of the aluminum (Al) and oxide (O) concentrations in the dispersion strengthened materials illustrates that the particles shown in FIGs. 2A and 2B contain aluminum and oxygen. Further, the size of the aluminum and oxide dispersoids in the resultant material is approximately 50-100 nm, which is in good agreement with the particle size in the original Nyacol A120 material.

A heat treatment experiment was carried out to see if the volume fraction of the particles increased by precipitation from solution. The heat treatment showed no increase in particle volume fraction indicating that the particles were formed during the DMLM process.

While only certain features of the invention have been illustrated and described herein, many modifications and changes will occur to those skilled in the art. It is, therefore, to be understood that the appended claims are intended to cover all such modifications and changes as fall within the scope of the invention.

Further aspects of the invention are provided by the subject matter of the following clauses:
1. A method for producing a dispersion strengthened material, comprising:
   exposing a plurality of first metal particles comprising a first metallic composition to a suspension of dispersoid forming particles comprising a second metallic composition to form a plurality of metal particles having the dispersoid forming particles thereon, wherein the plurality of metal particles having the dispersoid forming particles thereon has an interior portion comprising the first metallic composition and an outer surface portion comprising the second metallic composition; and
   subjecting the plurality of metal particles having the dispersoid forming particles thereon to an energy process to form a dispersion strengthened material.
2. The method of any preceding clause, wherein the first metallic composition comprises at least one metal selected from the group consisting of nickel, titanium, cobalt, zinc, copper, niobium, tantalum, tungsten, molybdenum, and yttrium.
3. The method of any preceding clause, wherein the plurality of first metal particles comprises a first mean particle size from about 10 µm to about 1000µm.
4. The method of any preceding clause, wherein the dispersoid forming particles comprise a second mean particle size of from about 5 nm to about 250 nm.
5. The method of any preceding clause, wherein the plurality of first metal particles comprises a first mean particle size and the dispersoid forming particles comprise a second mean particle size, wherein the first mean particle size is greater than the second mean particle size.
6. The method of any preceding clause, wherein the second metallic composition comprises a metallic oxide, a metallic nitride, a metallic carbide, and combinations thereof.
7. The method of any preceding clause, wherein the energy process comprises electron beam melting (EBM), direct selective laser melting (DSLM), selective laser melting (SLM), direct metal laser melting (DMLM), directed energy deposition (DED), and combinations thereof.
8. The method of any preceding clause, further comprising subjecting the plurality of metal particles having the dispersoid forming particles thereon to a drying process.
9. The method of any preceding clause, wherein the suspension comprises at least one fluid carrier, wherein the at least one fluid carrier comprises water.
10. The method of any preceding clause, wherein the dispersion strengthened material comprises from about 1% volume to about 10% volume of the second metallic composition.
11. The method of any preceding clause, wherein exposing the plurality of first metal particles to the suspension of dispersoid forming particles comprises: placing the plurality of first metal particles in a receptacle; pouring the suspension of dispersoid forming particles over the plurality of first metal particles in the receptacle, wherein the suspension comprises a fluid carrier; and exposing the first metal particles and the suspension of dispersoid forming particles to an evaporation process to form the plurality of metal particles having the dispersoid forming particles thereon.
12. The method of any preceding clause, wherein the evaporation process comprises evaporating the fluid carrier by drying the plurality of first metal particles and the suspension of dispersoid forming particles to remove the fluid carrier.
13. The method of any preceding clause, wherein the evaporation process comprises subjecting the plurality of first metal particles and the suspension of dispersoid forming particles to a spray-drying process to remove the fluid carrier.
14. The method of any preceding clause, wherein the evaporation process comprises subjecting the plurality of first metal particles and the suspension of dispersoid forming particles to a vacuum-drying process to remove the fluid carrier.
15. The method of any preceding clause, wherein the dispersion strengthened material comprises dispersoids of the second metallic composition within a metal-based matrix of the first metallic composition.
16. The method of any preceding clause, further comprising exposing the dispersion strengthened material to a directional recrystallization process.
17. A method of manufacturing a dispersion strengthened metal component comprising nano-sized dispersoids dispersed in a metal-based matrix, comprising: covering a first metal powder comprising a first plurality of particles with a suspension of a dispersoid forming powder comprising a second plurality of particles to form a third metal powder comprising the first plurality of particles with the second plurality of particles thereon, wherein the first plurality of particles comprise a first metallic composition and a first mean particle size, wherein the dispersoid forming powder is suspended in a fluid carrier, wherein the second plurality of particles comprise a second metallic composition and a second mean particle size; and producing a component from the third metal powder using electron beam melting (EBM), direct selective laser melting (DSLM), selective laser melting (SLM), direct metal laser melting (DMLM), or directed energy deposition (DED).
18. The method of any preceding clause, wherein the first mean particle size is greater than the second mean particle size.
19. The method of any preceding clause, wherein the component comprises nano-sized dispersoids of the second metallic composition within a metal-based matrix of the first metallic composition.

## Claims

1. A method for producing a dispersion strengthened material, comprising:
exposing a plurality of first metal particles comprising a first metallic composition to a suspension of dispersoid forming particles comprising a second metallic composition to form a plurality of metal particles having the dispersoid forming particles thereon, wherein the plurality of metal particles having the dispersoid forming particles thereon has an interior portion comprising the first metallic composition and an outer surface portion comprising the second metallic composition; and
subjecting the plurality of metal particles having the dispersoid forming particles thereon to an energy process to form a dispersion strengthened material.

2. The method of claim 1, wherein the first metallic composition comprises at least one metal selected from the group consisting of nickel, titanium, cobalt, zinc, copper, niobium, tantalum, tungsten, molybdenum, and yttrium.

3. The method of claim 1 or 2, wherein the plurality of first metal particles comprises a first mean particle size from about 10 µm to about 1000µm.

4. The method of any preceding claim, wherein the dispersoid forming particles comprise a second mean particle size of from about 5 nm to about 250 nm.

5. The method of any preceding claim, wherein the plurality of first metal particles comprises a first mean particle size and the dispersoid forming particles comprise a second mean particle size, wherein the first mean particle size is greater than the second mean particle size.

6. The method of any preceding claim, wherein the second metallic composition comprises a metallic oxide, a metallic nitride, a metallic carbide, and combinations thereof.

7. The method of any preceding claim, wherein the energy process comprises electron beam melting (EBM), direct selective laser melting (DSLM), selective laser melting (SLM), direct metal laser melting (DMLM), directed energy deposition (DED), and combinations thereof.

8. The method of any preceding claim, further comprising subjecting the plurality of metal particles having the dispersoid forming particles thereon to a drying process.

9. The method of any preceding claim, wherein the suspension comprises at least one fluid carrier, wherein the at least one fluid carrier comprises water.

10. The method of any preceding claim, wherein the dispersion strengthened material comprises from about 1% volume to about 10% volume of the second metallic composition.

11. The method of any preceding claim, wherein exposing the plurality of first metal particles to the suspension of dispersoid forming particles comprises: placing the plurality of first metal particles in a receptacle; pouring the suspension of dispersoid forming particles over the plurality of first metal particles in the receptacle, wherein the suspension comprises a fluid carrier; and exposing the first metal particles and the suspension of dispersoid forming particles to an evaporation process to form the plurality of metal particles having the dispersoid forming particles thereon.

12. The method of claim 11, wherein the evaporation process comprises evaporating the fluid carrier by drying the plurality of first metal particles and the suspension of dispersoid forming particles to remove the fluid carrier.

13. The method of claim 11, wherein the evaporation process comprises subjecting the plurality of first metal particles and the suspension of dispersoid forming particles to a spray-drying process to remove the fluid carrier.

14. The method of claim 11, wherein the evaporation process comprises subjecting the plurality of first metal particles and the suspension of dispersoid forming particles to a vacuum-drying process to remove the fluid carrier.

15. The method of any preceding claim, wherein the dispersion strengthened material comprises dispersoids of the second metallic composition within a metal-based matrix of the first metallic composition.
